# EUROPEAN PATENT SPECIFICATION

(11) **EP 1 981 679 B1**
(45) Date of publication and mention of the grant of the patent: **09.09.2009**
(21) Application number: 07703203.5
(22) Date of filing: 01.02.2007
(51) Int. Cl.: B23K 26/12, B23K 26/14, B23K 26/16, B23K 26/40

(54) **LASER MACHINING APPARATUS AND METHOD WITH A VACUUM EXTRACTING SYSTEM AND AT LEAST A FIRST CONTAINEMENT ZONE FOR CONTAINING DEPOSITION OF EMITTED HAZARDOUS MATERIAL**
LASERBEARBEITUNGSGERÄT UND VERFAHREN MIT EINEM SAUGGLOCKENSYSTEM UND MINDESTENS EINEM EINGRENZUNGSBEREICH ZUR EINGRENZUNG DER ABLAGERUNG VON EMITTIERTEN GEFAHRSTOFFEN
APPAREIL D'USINAGE LASER ET PROCEDE AVEC UN SYSTEME D'EXTRACTION A VIDE ET AU MOINS UNE PREMIERE ZONE DE CONFINEMENT POUR CONFINER LE DEPOT DE MATIERES DANGEREUSES EMISES

(30) Priority: 02.02.2006 GB 0602115
(43) Date of publication of application: 22.10.2008
(73) Proprietor: Electro Scientific Industries, Inc., Portland, OR 97229 (US)
(72) Inventor: O'HALLORAN, John, County Dublin (IE); TULLY, John, County Cavan (IE); GRIMES, Pat, County Dublin (IE)
(74) Representative: Want, Clifford James
(86) International application number: PCT/EP2007/000874
(87) International publication number: WO 2007/088059

(56) References cited:
- EP-A- 1 052 691
- JP-A- 10 193 161
- JP-A- 2003 191 082
- US-A- 5 669 979
- US-A1- 2002 170 891
- US-A1- 2004 226 927

## Description

This invention relates to a laser machining apparatus and a method of layer machining according to the preamble of claims 1 and 9 respectively (see, for example, US 2002/170 891), and in particular to extraction and containment of hazardous emissions during laser machining.

Traditionally, dicing of wafers and other semiconductors has been performed with mechanical dicing saws. Disadvantages with using mechanical saws are that mechanical stress caused by the saw on a wafer can result in reduced yield and a relatively large kerf is formed by the saw. Using lasers, it is possible to increase yield and also to reduce the width of the kerf or street between devices on the wafer, allowing an increase in a number of devices per wafer. An advantage from such a reduction in street width is particularly significant for devices in which the kerf is large in relation to a size of the devices.

Via production in wafers such as gallium arsenide has traditionally been performed chemically or using etch processes. Laser via machining offers a significant advantage in terms of versatility and reduced cost of ownership due to high throughput and flexibility.

However, the use of lasers in micro machining applications such as laser dicing and laser based via drilling of some materials may be hazardous because of emissions created during the machining process.

Whilst there have been proposals for laser dicing of materials, such as gallium arsenide, which may emit hazardous materials during laser machining, it is apparent that known tooling could not be used safely on a production basis as in known laser machining apparatus no attention has been directed to where generated particles mary machining apparatus no attention has been directed to where generated particles may be deposited during the machining operation.

It is an object of the present invention at least to ameliorate the aforesaid deficiency in the prior art.

According to a first aspect of the invention, there is provided a laser machining apparatus according to claim 1.

According to the present invention, the laser machining apparatus comprises a housing surrounding the first containment zone arranged to contain deposition of any un-extracted hazardous material not deposited in the first containment zone.

Advantageously, an ambient gas pressure in the first containment zone in less than an ambient gas pressure in the second containment zone.

Conveniently, the laser machining apparatus further comprises a transfer chamber for transferring laser machined material from the machining region to a wash station arranged to wash any emitted hazardous material from the machined material, without release of the hazardous material to an environment of the laser machining apparatus during transfer.

Conveniently, the laser machining apparatus is arranged to machine a semiconductor wafer.

Advantageously, the laser machining apparatus is arranged at least one of to dice and to machine a via in the semiconductor wafer.

Conveniently, the laser machining apparatus is arranged to machine a III-V semiconductor.

Conveniently, the laser machining apparatus is arranged to machine an arsenide.

According to a second aspect of the invention, there is provided a method of laser machining a substrate which emits a hazardous material during laser machining according to claim 9.

According to the present invention, the method further comprises providing a housing surrounding the first containment zone and containing in the second containment zone deposition of any un-extracted hazardous material not deposited in the first containment zone.

Advantageously, the method further comprises providing an ambient gas pressure differential between the first containment zone and the second containment zone to resist transfer of hazardous material from the first containment zone to the second containment zone.

Conveniently, the method further comprises providing a transfer chamber and transferring laser-machined material from the machining region to a wash station and washing any emitted hazardous material from the machined material, without release of the hazardous material to an environment of the laser machining apparatus during transfer.

Conveniently, the method is arranged to machine a semiconductor wafer.

Advantageously, the method is arranged at least one of to dice and to machine a via in the semiconductor wafer.

Conveniently, the method is arranged to machine a III-V semiconductor.

Conveniently, the method is arranged to machine an arsenide.

The invention will now be described, by way of example, with reference to the accompanying drawings in which:
Figure 1 is a perspective view of a portion of a laser machining apparatus according to the invention;
Figure 2 is a cutaway drawing illustrating airflow through a machining portion of the laser machining apparatus of Figure 1;
Figure 3 is a schematic cross-section of a laser machining apparatus according to the invention;
Figure 4 is a perspective drawing of a portion of the laser machining apparatus of Figure 1 showing primary and secondary containment chambers; and
Figure 5 is a perspective drawing of a portion of the laser machining apparatus of Figure 1 showing a transport containment chamber for transporting a machined wafer from the machining portion of the apparatus to a wash station.

In the Figures, like reference numerals denote like parts.

A laser processing machine for processing semiconductor wafers may be used for dicing or for drilling via formations in semiconductor or other materials of the wafer or substrate. The machining process includes absorption of laser light by at least the material intended to be machined, causing photoablation, photoionisation or other photodissociative phenomenon that result in the formation of gases and solid particle emissions, which may be damaging to the machine or dangerous for an operator, or which may react with materials in the local environment to form potentially dangerous compounds that may present a threat to the machine or operator.

One such process is laser machining of gallium arsenide with a q-switched pulsed laser. In this process gallium arsenide dissociates to form hazardous elemental arsenic. It is therefore necessary to prevent arsenic emission from the machining or cutting region of the laser machining apparatus.

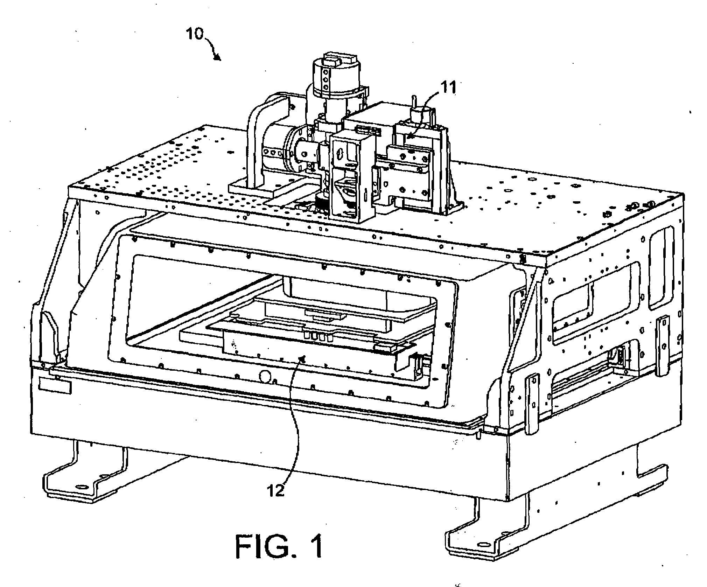

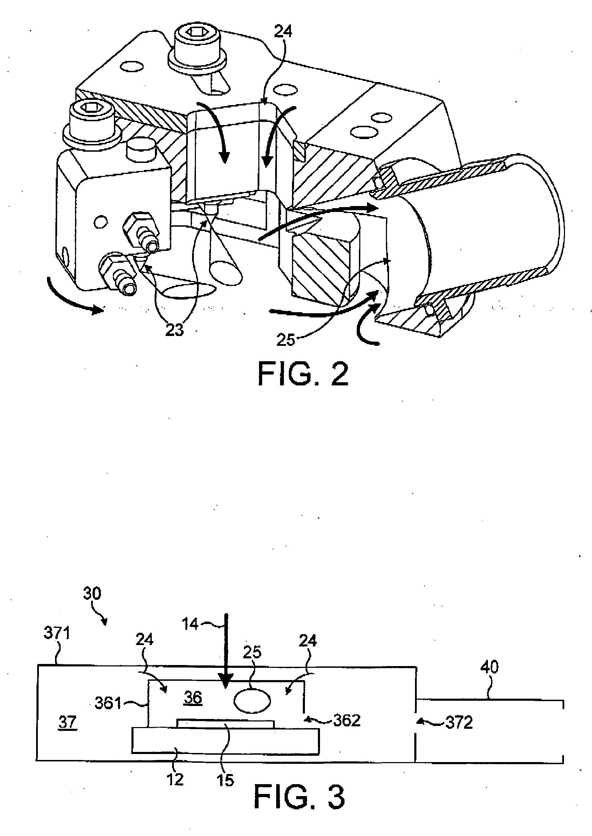

Referring to Figure 1, a laser machining system 10 according to the invention comprises a laser with a beam delivery path (not shown) and a beam steering or positioning system 11. The beam positioning system may be a galvanometer or other scanning system which delivers a beam 14 (see Figure 3) to a work surface 15. Alternatively a fixed beam may be used and the wafer 15 moved relative to the beam 14 allowing positioning of the beam at a specified location on the wafer. Typically, the beam positioning system includes an XY table 12 and may also include gas or liquid assist nozzles 23, as shown in Figure 2, for delivering a gas or liquid to a machining region.

Whether using a steerable and positionable laser beam or a fixed laser beam 14, the laser machining process generally results in the emission of both particles and gases. Typically, if no precautions are taken, some of these particles and gases become airborne and can be carried to locations within the machine that are some distance from the machining region.

Figure 2 illustrates a partial cross-section of a system designed for a galvo-based beam delivery system which provides a significant reduction in local emissions from the machining region during a laser machining process. The system includes an air flow input window 24 through which air enters from outside the machining region and an air flow output 25 through which air is drawn out of the machining region to remove particles, gases and debris from the machining region during the machining process for safe disposal or recycling. This extraction system provides a first mechanism for preventing emission of hazardous material to the environment and for preventing deposition of hazardous material in the general machine area outside the immediate machining region.

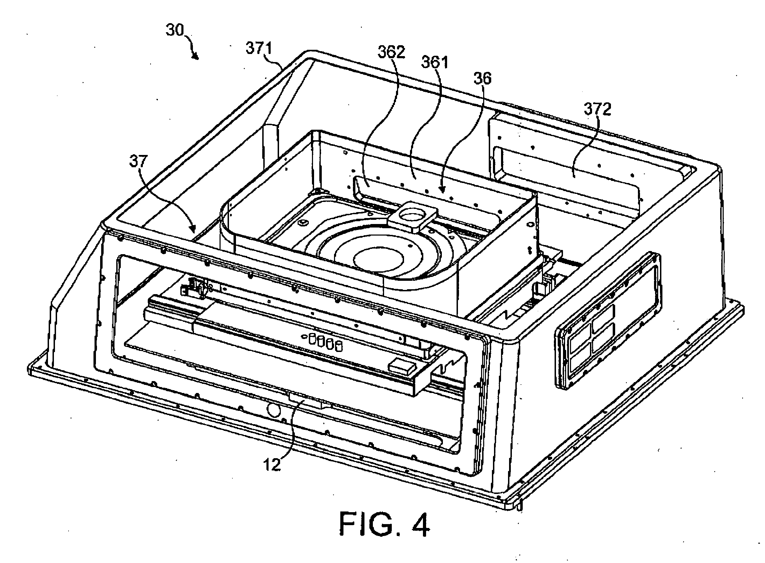

Referring to Figures 3 and 4, and according to the present invention, a second mechanism for prevention of unwanted material deposition involves use of a primary containment zone 36 and a secondary containment zone 37. The primary containment zone 36 is a volume immediately around the wafer 15. This area is separated from an area outside the primary containment zone by a vertical barrier 361 but is open at a top thereof. The barrier prevents significant deposition of material outside the primary containment zone 36 immediately around the wafer 15 and confines particle deposition to the primary containment zone 36 and the wafer 15. The barrier 361 is mounted on the XY table 12 onto which a wafer 15 is to be loaded so that the primary containment zone 36 moves on the XY table 12 with the wafer 15 during machining. A passage 362, substantially rectangular in cross-section, is provided through the vertical barrier 361 for loading a wafer 15 into the machining region within the primary containment zone 36 and unloading a machined wafer 15 from the machining region.

The secondary containment zone 37 surrounds the primary containment zone 36 defined by encompassing chamber walls 371, closed at a top thereof but transparent to the laser beam 14. A passage 372, substantially rectangular in cross-section, is provided through the chamber walls 371 so that the passage 362 in the primary containment zone wall 361 can be aligned with the passage 372 through the secondary containment zone walls 371 by suitable movement of the primary containment zone with the XY table.

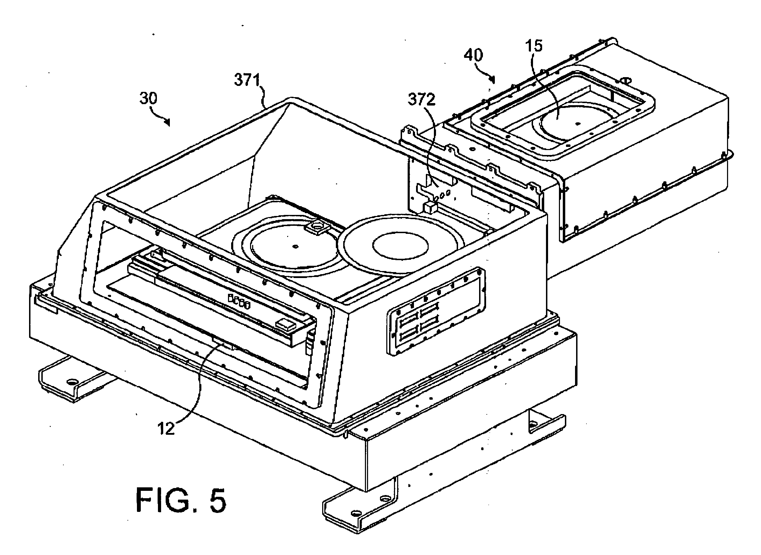

Referring to Figure 3, and to Figure 5 in which the walls 361 of the primary confinement zone 36 are omitted in the interests of clarity, a wafer handling system is provided to pick the wafer 15 from this machining region to transport the wafer through a confinement tunnel 40 aligned with the passage 372 in the chamber walls 371 and into a wash station. Sufficient hazardous material is removed from the wafer in the wash station for the washed wafer to be safe to handle.

Air pressure, or ambient gas pressure where the ambient gas is not air, is preferably held lower within the primary confinement zone 36 than in the secondary confinement zone 37 to seek to prevent hazardous particles being carried outside of the primary confinement zone 36. Any particles that do accidentally enter the secondary containment zone 37 are contained within the secondary confinement zone 37.

Thus the emission of hazardous material from the machining region is substantially prevented by extraction of a majority of particulate and gaseous emissions from the machining region, as shown in Figure 2, and confinement of particularly particulate emissions to the wafer region in primary and secondary containment zones or chambers 36, 37 as shown in Figure 4.

Most particulate and gas emission is removed from the machining zone by the extraction system illustrated in Figure 2. According to the invention,the use of containment zones or chambers 36, 37 as described, effectively eliminates any deposition of hazardous material outside the secondary containment zone 37. Most deposition outside the immediate machining zone occurs in the primary containment zone 36. Wafers are loaded into this machining region by a handling system operating inside a transfer chamber 40. After machining, wafers are removed in a reverse manner and transferred to a wash system.

The invention potentially reduces machine downtime by reducing an amount of maintenance time required to keep the machine safe by preventing build-up of hazardous material in the general machine area.

There has been described a machine for laser processing a semiconductor wafer or other substrate where potentially hazardous materials are emitted during the machining process and where the machine is designed to extract or confine emissions so that they do not present a hazard to the well-being of personnel in the vicinity of the machine.

Thus the described laser machining system for machining hazardous materials comprises a localised vacuum exhaust system for the removal of hazardous particles and gases, a primary containment zone 36 designed to restrict hazardous material deposition to the area of the substrate being machined and a secondary containment zone 37 further to prevent hazardous material from reaching parts of the machine exposed to the atmosphere. A confinement passage 40 is provided to transport machined wafers 15 to a wash station before subsequent handling.

## Claims

1. A laser machining apparatus (10) arranged to machine a substrate (15) which emits a hazardous material during laser machining, the apparatus (10) comprising a vacuum extraction system including a housing (371) surrounding a machining region for extracting at least some of the emitted hazardous material from a machining region of the apparatus (10) and **characterised by** at least a first containment chamber (36) within the housing (371) encompassing the machining region arranged substantially to contain deposition of any un-extracted emitted hazardous material within the first containment chamber (36).

2. A laser machining apparatus (10) as claimed in claim 1, comprising a second containment chamber (37) defined by the housing (371) surrounding the first containment chamber (36) arranged to contain deposition of any un-extracted hazardous material not deposited in the first containment chamber (36).

3. A laser machining apparatus (10) as claimed in claim 2, wherein an ambient gas pressure in the first containment chamber (36) in less than an ambient gas pressure in the second containment chamber (37).

4. A laser machining apparatus (10) as claimed in any of the preceding claims, further comprising a transfer chamber (40) for transferring laser machined material from the machining region to a wash station arranged to wash any emitted hazardous material from the machined material, without release of the hazardous material to an environment of the laser machining apparatus (10) during transfer.

5. A laser machining apparatus (10) as claimed in any of the preceding claims arranged to machine a semiconductor wafer (15).

6. A laser machining apparatus (10) as claimed in claim 5, arranged at least one of to dice and to machine a via in the semiconductor wafer (15).

7. A laser machining apparatus (10) as claimed in any of the preceding claims arranged to machine a III-V semiconductor.

8. A laser machining apparatus (10) as claimed in any of the preceding claims, arranged to machine an arsenide.

9. A method of laser machining a substrate (15) which emits a hazardous material during laser machining, comprising the steps of:
a. extracting at least some of the emitted hazardous material from a housing (371) surrounding a machined region of the material; and **characterised by**
b. providing at least a first containment chamber (36) encompassing the machined region within the housing (371) and substantially containing deposition of any un-extracted emitted hazardous material in the first containment chamber (36).

10. A method as claimed in claim 9, comprising providing a second containment chamber (37) defined by the housing (371) surrounding the first containment chamber (36) and containing in the second containment chamber (37) deposition of any un-extracted hazardous material not deposited in the first containment chamber (36).

11. A method as claimed in claim 10, comprising providing an ambient gas pressure differential between the first containment chamber (36) and the second containment chamber (37) to resist transfer of hazardous material from the first containment chamber (36) to the second containment chamber (37).

12. A method as claimed in any of claims 9 to 11, further comprising providing a transfer chamber (40) and transferring laser-machined material from the machining region to a wash station and washing any emitted hazardous material from the machined material, without release of the hazardous material to an environment of the laser machining apparatus (10) during transfer.

13. A method as claimed in any of claims 9 to 12, arranged to machine a semiconductor wafer (15).

14. A method as claimed in claim 13, arranged at least one of to dice and to machine a via in the semiconductor wafer (15).

15. A method as claimed in any of claims 9 to 14 arranged to machine a III-V semiconductor.

16. A method as claimed in any of claims 9 to 15, arranged to machine an arsenide.

## Patentansprüche

1. Laserbearbeitungsvorrichtung (10), die zur Bearbeitung eines Substrats (15) angeordnet ist, das während der Laserbearbeitung einen Gefahrstoff emittiert, wobei die Vorrichtung (10) ein Vakuumextraktionssystem umfasst, das ein Gehäuse (371) aufweist, das einen Bearbeitungsbereich umgibt, um zumindest einen Teil des emittierten Gefahrstoffs aus dem Bearbeitungsbereich der Vorrichtung (10) zu entfernen, und **gekennzeichnet durch** eine erste Sicherheitskammer (36) in dem Gehäuse (371), welche den Bearbeitungsbereich einschließt, wobei die Kammer im Wesentlichen so angeordnet ist, dass sie die Abscheidung von etwaigem nicht extrahierten emittierten Gefahrstoff in der ersten Sicherheitskammer (36) hält.

2. Laserbearbeitungsvorrichtung (10) nach Anspruch 1, wobei diese eine zweite Sicherheitskammer (37) umfasst, die durch das Gehäuse (371) definiert wird, welches die erste Sicherheitskammer (36) umgibt, wobei die zweite Kammer im Wesentlichen so angeordnet ist, dass sie die Abscheidung von etwaigem nicht extrahierten Gefahrstoff enthält, der nicht in der ersten Sicherheitskammer (36) abgeschieden wird.

3. Laserbearbeitungsvorrichtung (10) nach Anspruch 2, wobei ein Umgebungsgasdruck in der ersten Sicherheitskammer (36) niedriger ist als ein Umgebungsgasdruck in der zweiten Sicherheitskammer (37).

4. Laserbearbeitungsvorrichtung (10) nach einem der vorstehenden Ansprüche, wobei diese ferner eine Übertragungskammer (40) zur Übertragung von mittels Laser bearbeitetem Material aus dem Bearbeitungsbereich zu einer Waschstation umfasst, wobei die Waschstation so angeordnet ist, dass jeglicher emittierter Gefahrstoff von dem bearbeiteten Material gewaschen wird, ohne dass der Gefahrstoff während der Übertragung in eine Umgebung der Laserbearbeitungsvorrichtung freigesetzt wird.

5. Laserbearbeitungsvorrichtung (10) nach einem der vorstehenden Ansprüche, wobei Vorrichtung für die Bearbeitung eines Halbleiter-Wafers (15) angeordnet ist.

6. Laserbearbeitungsvorrichtung (10) nach Anspruch 5, wobei die Vorrichtung so angeordnet ist, dass sie entweder zumindest einen Halbleiter-Wafer (15) zerteilt oder in diesem eine Durchkontaktierung erzeugt.

7. Laserbearbeitungsvorrichtung (10) nach einem der vorstehenden Ansprüche, wobei die Vorrichtung zur Bearbeitung eines III-V-Halbleiters angeordnet ist.

8. Laserbearbeitungsvorrichtung (10) nach einem der vorstehenden Ansprüche, wobei die Vorrichtung zur Bearbeitung eines Arsenids angeordnet ist.

9. Verfahren zur Laserbearbeitung eines Substrats (15), das während der Laserbearbeitung einen Gefahrstoff emittiert, wobei das Verfahren die folgenden Schritte umfasst:
a) das Extrahieren zumindest eines Teils des emittierten Gefahrstoffs von einem Gehäuse (371), welches einen bearbeiteten Bereich des Materials umgibt; und **gekennzeichnet durch**
b) das Bereitstellen zumindest einer ersten Sicherheitskammer (36), welche den bearbeiteten Bereich in dem Gehäuse (371) einschließt, und wobei im Wesentlichen jeglicher abgeschiedener nicht extrahierter, emittierter Gefahrstoff in der ersten Sicherheitskammer (36) gehalten wird.

10. Verfahren nach Anspruch 9, wobei das Verfahren das Bereitstellen einer zweiten Sicherheitskammer (37) umfasst, die durch das Gehäuse (371) definiert ist, welches die erste Sicherheitskammer (36) umgibt, wobei die Abscheidung von etwaigem nicht extrahierten Gefahrstoff enthält, der nicht in der ersten Sicherheitskammer (36) abgeschieden wird, in der zweiten Sicherheitskammer (37) gehalten wird.

11. Verfahren nach Anspruch 10, wobei das Verfahren das Bereitstellen eines Umgebungsgasdruckunterschieds zwischender ersten Sicherheitskammer (36) und der zweiten Sicherheitskammer (37) umfasst, um der Übertragung von Gefahrstoff von der ersten Sicherheitskammer (36) zu der zweiten Sicherheitskammer (37) zu vermeiden.

12. Verfahren nach einem der Ansprüche 9 bis 11, wobei das Verfahren ferner das Bereitstellen einer Übertragungskammer (40) umfasst und das Übertragen von mittels Laser bearbeitetem Material aus dem Bearbeitungsbereich zu einer Waschstation sowie das Waschen jeglichen emittierten Gefahrstoffs von dem bearbeiteten Material, ohne dass der Gefahrstoff während der Übertragung in eine Umgebung der Laserbearbeitungsvorrichtung (10) freigesetzt wird.

13. Verfahren nach einem der Ansprüche 9 bis 12, mit einer Anordnung zur Bearbeitung eines Halbleiter-Wafers (15).

14. Verfahren nach Anspruch 13, mit einer Anordnung, um zumindest den Halbleiter-Wafer (15) zu zerteilen oder eine Durchkontaktierung in diesen zu bearbeiten.

15. Verfahren nach einem der Ansprüche 9 bis 14, mit einer Anordnung zur Bearbeitung eines III-V-Halbleiters.

16. Verfahren nach einem der Ansprüche 9 bis 15, mit einer Anordnung zur Bearbeitung eines Arsenids.

## Revendications

1. Appareil d'usinage laser (10) agencé pour usiner un substrat (15) qui émet des matières dangereuses pendant l'usinage laser, l'appareil (10) comprenant un système d'extraction à vide incluant un boîtier (371) entourant une région d'usinage pour extraire au moins au moins une partie des matières dangereuses émises d'une région d'usinage de l'appareil (10) et **caractérisé par** au moins une première chambre de confinement (36) à l'intérieur du boîtier (371) englobant la région d'usinage agencée sensiblement pour contenir le dépôt de toute matière dangereuse émise non extraite dans la première chambre de confinement (36).

2. Appareil d'usinage laser (10) selon la revendication 1, comprenant une seconde chambre de confinement (37) définie par le boîtier (371) entourant la première chambre de confinement (36) agencée pour contenir le dépôt de toute matière dangereuse non extraite non déposé dans la première chambre de confinement (36).

3. Appareil d'usinage laser (10) selon la revendication 2, dans lequel une pression de gaz ambiante dans la première chambre de confinement (36) est inférieure à une pression de gaz ambiante dans la seconde chambre de confinement (37).

4. Appareil d'usinage laser (10) selon l'une quelconque des revendications précédentes, comprenant en outre une chambre de transfert (40) pour transférer les matières usinées par laser de la région d'usinage à une station de lavage agencée pour laver toute matière dangereuse émise des matières usinées, sans libération des matières dangereuses dans un environnement de l'appareil d'usinage laser (10) pendant le transfert.

5. Appareil d'usinage laser (10) selon l'une quelconque des revendicationsprécédentes agencé pour usiner une tranche semi-conductrice (15).

6. Appareil d'usinage laser (10) selon la revendication 5, agencé au moins pour couper ou usiner un trou dans la tranche semi-conductrice (15).

7. Appareil d'usinage laser (10) selon l'une quelconque des revendicationsprécédentes agencé pour usiner un semi-conducteur III-V.

8. Appareil d'usinage laser (10) selon l'une quelconque des revendicationsprécédentes, agencé pour usiner un arséniure.

9. Procédé d'usinage laser d'un substrat (15) qui émet des matières dangereuses pendant l'usinage laser, comprenant l'étape consistant à :
a. extraire au moins certaines des matières dangereuses émises d'un boîtier (371) entourant une région usinée des matières ; et **caractérisé par** l'étape consistant à
b. fournir au moins une première chambre de confinement (36) englobant la région usinée à l'intérieur du boîtier (371) et contenant sensiblement un dépôt de toute matière dangereuse émise non extraite dans la première chambre de confinement (36).

10. Procédé selon la revendication 9, comprenant les étapes consistant à fournir une seconde chambre de confinement (37) définie par le boîtier (371) entourant la première chambre de confinement (36) et contenant dans la seconde chambre de confinement (37) le dépôt de toute matière dangereuse non extraite non déposé dans la première chambre de confinement (36).

11. Procédé selon la revendication 9 ou 10, comprenant les étapes consistant à fournir un différentiel de pression de gaz ambiante entre la première chambre de confinement (36) et la seconde chambre de confinement (37) pour résister au transfert de matières dangereuses de la première chambre de confinement (36) à la seconde chambre de confinement (37).

12. Procédé selon l'une quelconque des revendications 9 à 11, comprenant en outre les étapes consistant à fournir une chambre de transfert (40) et à transférer les matières usinées par laser de la région d'usinage à une station de lavage et à laver toute matière dangereuse émise des matières usinées, sans libération des matières dangereuses dans un environnement de l'appareil d'usinage laser (10) pendant le transfert.

13. Procédé selon l'une quelconque des revendications 9 à 12, agencé pour usiner une tranche semi-conductrice (15).

14. Procédé selon la revendication 13, agencé au moins pour couper ou pour usiner un trou dans la tranche semi-conductrice (15).

15. Procédé selon l'une quelconque des revendications 9 à 14 agencé pour usiner un semi-conducteur HI-V.

16. Procédé selon l'une quelconque des revendications 9 à 15, agencé pour usiner un arséniure.
